# EUROPÄISCHE PATENTSCHRIFT

(11) **EP 1 016 705 B1**
(45) Veröffentlichungstag und Bekanntmachung des Hinweises auf die Patenterteilung: **24.03.2004**
(21) Anmeldenummer: 99121717.5
(22) Anmeldetag: 03.11.1999
(51) Int. Cl.: C10J 3/50, F23D 23/00, F23D 11/10, C01B 3/36

(54) **Brenner für die partielle Oxidation von flüssigen, kohlenstoffhaltigen Brennstoffen**
Burner for partial oxidation of carbon containing liquid fuel
Brûleur pour oxydation partielle de combustibles liquides contenant du carbone

(30) Priorität: 28.12.1998 DE 19860479
(43) Veröffentlichungstag der Anmeldung: 05.07.2000
(73) Patentinhaber: MG Technologies AG, 60325 Frankfurt am Main (DE)
(72) Erfinder: Zwiefelhofer, Uwe, 61267 Neu-Anspach (DE); Brehm, Lothar, 60599 Frankfurt am Main (DE); Quass, Gunter, 60435 Frankfurt am Main (DE); Liebner, Waldemar, Dr., 61440 Oberursel (DE); Fellner, Helmut, 61352 Bad Homburg (DE); Grünfelder, Gerd Johann, 61352 Bad Homburg (DE); Weber, Roland, 02997 Wittichenau (DE)
(74) Vertreter: Revesz, Veronika

(56) Entgegenhaltungen:
- US-A- 1 999 121
- US-A- 4 341 530
- US-A- 4 493 636
- US-A- 4 999 029
- US-A- 5 772 708
- US-E- R E24 771

## Beschreibung

Die Erfindung betrifft einen Brenner für die partielle Oxidation von flüssigem, kohlenstoffhaltigem Brennstoff mit Wasserdampf und einem sauerstoffhaltigen Gas, wobei die Austrittsmündung des Brenners in eine Brennkammer gerichtet ist.

Brenner dieser Art sind bekannt und z. B. in EP 0 127 273 B1, im US-Patent 4 933 163 und in EP-0 707 880 A1 beschrieben. Aus der letztgenannten Veröffentlichung ist auch die Anordnung eines solchen Brenners am Eingang einer leeren Brennkammer bekannt, wobei das erzeugte rohe Produktgas anschließend gereinigt und z. B. zu einem Synthesegas weiterverarbeitet wird.

Der Erfindung liegt die Aufgabe zugrunde, einen Brenner für die partielle Oxidation von flüssigen Brennstoffen, wie z. B. Schweröl, zu schaffen, bei welchem der Brennstoff zunächst zu feinen Tröpfchen zerteilt und intensiv mit Wasserdampf gemischt wird, bevor das Gemisch mit dem Sauerstoff in Kontakt kommt. Erfindungsgemäß wird dies dadurch erreicht, daß der Brenner in der Nähe der Austrittsmündung eine konische, sich zur Austrittsmündung hin erweiternde Mischkammer aufweist, daß ein den flüssigen Brennstoff in die Mischkammer einspeisendes erstes Rohr koaxial zur Mischkammer angeordnet ist, wobei sich das Mündungsende des ersten Rohrs im Bereich des Eintrittsendes der Mischkammer befindet und zwischen dem Mündungsende des ersten Rohrs und dem Eintrittsende der Mischkammer ein Ringspalt für den Durchtritt von Wasserdampf besteht, daß eine erste Ringkammer für das Durchleiten von Wasserdampf das erste Rohr umgibt und mit dem Ringspalt verbunden ist, daß ein zweites Rohr die erste Ringkammer umgibt und abgedichtet an der Außenseite der Mischkammer anliegt, daß eine zweite Ringkammer für das Durchleiten von sauerstoffhaltigem Gas zur Austrittsmündung des Brenners das zweite Rohr und die Mischkammer umgibt, und daß die Mischkammer von ihrer Austrittsmündung bis zur Mündung des ersten Rohrs eine axiale Länge von 10 bis 300 mm und vorzugsweise mindestens 20 mm, einen größten Innendurchmesser von 10 bis 100 mm und zumeist 20 bis 80 mm und einen Konuswinkel x, gemessen gegen die Mischkammerachse, von 3 bis 20° aufweist.

Als flüssiger, kohlenstoffhaltiger Brennstoff kommt z. B. Schweröl, eine pumpfähige Aufschlämmung körniger Kohle oder Petrolkoks in Wasser oder in flüssigen Kohlenwasserstoffen, sowie eine Emulsion von Bitumen oder Asphalt in Wasser infrage. Als O₂-haltiges Gas verwendet man üblicherweise technisch reinen Sauerstoff oder mit Sauerstoff angereicherte Luft, wenn der Stickstoffgehalt nicht stört.

Der Druck in der Brennkammer, in welchem das vom Brenner kommende Gemisch partiell oxidiert wird, liegt üblicherweise im Bereich von 1 bis 100 bar.

Ausgestaltungsmöglichkeiten des Brenners werden mit Hilfe der Zeichnung erläutert. Es zeigt:
- Fig. 1: einen Längsschnitt durch den Auslaßbereich des Brenners in schematischer Darstellung,
- Fig. 2: einen Längsschnitt durch eine Verbindungshülse und
- Fig. 3: die Anordnung mehrerer, zusammenwirkender Brenner.

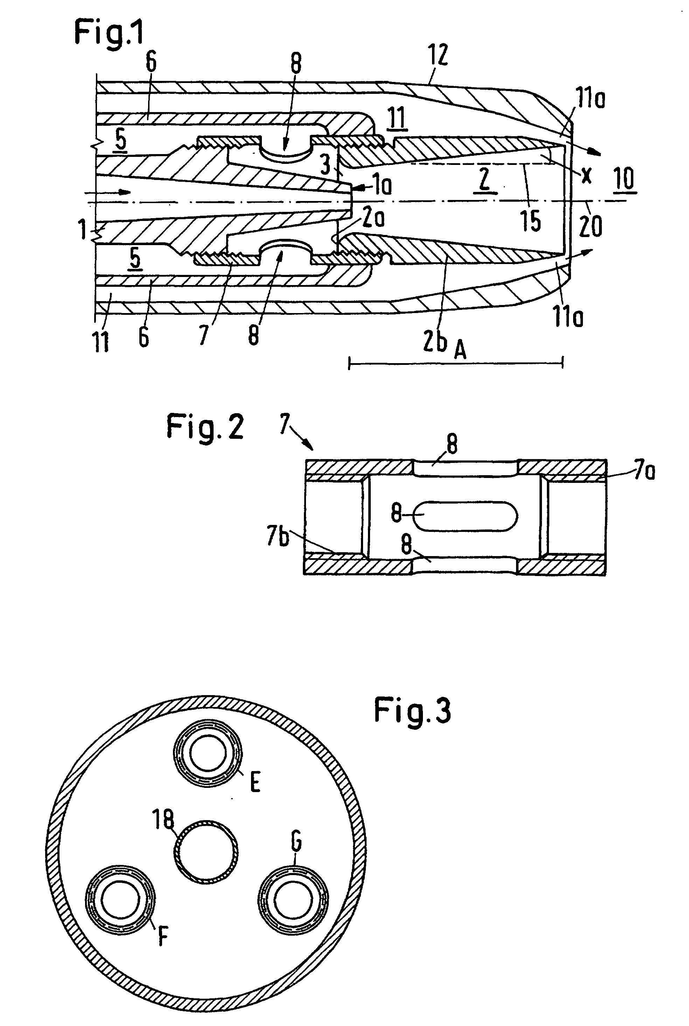

Beim Brenner der Fig. 1 werden die flüssigen Kohlenwasserstoffe mittels einer nicht dargestellten Pumpe durch das zentrale erste Rohr (1) in die konische Mischkammer (2) gedrückt und dabei zu feinen Tröpfchen zerteilt. Das Mündungsende (1a) des ersten Rohrs befindet sich im Bereich des Eintrittsendes (2a) der Mischkammer, wobei ein Ringspalt (3) für den Durchtritt von Wasserdampf besteht.

Der Wasserdampf kommt aus einer ersten Ringkammer (5), die das erste Rohr (1) umgibt, er strömt zunächst zwischen einem zweiten Rohr (6) und der Außenseite einer Verbindungshülse (7) durch deren Öffnungen (8) (vergleiche auch Fig. 2) zum Ringspalt (3) und dann in die Mischkammer (2).

Die Mischkammer dient dazu, eine intensive Vermischung zwischen den flüssigen Kohlenwasserstoffen und dem Wasserdampf herzustellen und dabei die flüssigen Kohlenwasserstoffe durch ihre Form und Anordnung zu feinen Tröpfchen zu zerteilen. Dieses Gemisch tritt in die Brennkammer (10) aus, die in der Zeichnung nicht dargestellt ist.

O₂-haltiges Gas kommt aus einer zweiten Ringkammer (11), welche nach außen durch ein drittes Rohr (12) begrenzt ist. Zwischen dem dritten Rohr und der Außenseite der Mischkammer (2) bestehen eine oder mehrere Durchlaßöffnungen (11a), durch welche das O₂-haltige Gas zur Brennerachse (20) hin in die Brennkammer (10) und in das von der Mischkammer (2) kommende Öl- WasserdampfGemisch geleitet wird. Die hierdurch bewirkte partielle Verbrennung der Kohlenwasserstoffe liefert die Energie für die erwünschten Vergasungsreaktionen, um ein Gasgemisch mit H₂ und CO als Hauptkomponenten zu erzeugen.

Üblicherweise ist das dritte Rohr (12) von einem Kühlwassermantel umgeben, der jedoch zur Vereinfachung in Fig. 1 nicht dargestellt ist. Das zweite Rohr (6) stützt sich auf der Außenseite der Verbindungshülse (7) im Bereich der Ringkammer (3) gleitend und abgedichtet ab, was im einzelnen nicht dargestellt ist. Hierfür geeignete Gleitdichtungen sind bekannt.

Die Innenseite der Hülse (7) - vergleiche Fig. 2 - ist mit Gewinden (7a) und (7b) versehen, die einerseits in das erste Rohr (1) und anderseits in die Wand (2b) der Mischkammer (2) eingreifen. Dadurch ergeben sich Verstellmöglichkeiten, wodurch sich die Eintauchtiefe des ersten Rohrs (1) in die Mischkammer (2), die Breite des Ringspalts (3) und auch die Breite der Öffnungen (11a) einstellen lassen. Zweckmäßigerweise ist das erste Rohr (1), welches die flüssigen Kohlenwasserstoffe unter Überdruck in die Mischkammer (2) führt, zu seiner Mündung (1a) hin verengt, so daß das Öl unter starker Zerstäubung in die Mischkammer (2) eintritt.

Die Mischkammer (2) hat eine axiale Länge (A), gemessen von ihrer Austrittsmündung bis zur Mündung (1a) des ersten Rohrs, von 10 bis 300 mm und vorzugsweise 20 bis 200 mm. Der Konuswinkel (x), der gegen eine achsparallele Linie (15) gemessen wrid, beträgt 3 bis 20° und üblicherweise 5 bis 15°. Der größte Innendurchmesser der Mischkammer (2), der an der Austrittsmündung erreicht wird, liegt im Bereich von 10 bis 100 mm und vorzugsweise 20 bis 80 mm. Durch diese Ausgestaltung erreicht man in der Kammer (2) eine intensive Vermischung von Öl und Wasserdampf sowie auch eine erwünschte Verringerung der Strömungsgeschwindigkeit zur Brennkammer (10) hin, so daß der Sauerstoff aus den Öffnungen (11a) mit dem Öl-Wasserdampf-Gemisch intensiv reagieren kann. Abweichend von der Zeichnung können die Öffnungen (11a) auch so gestaltet sein, daß sie eine Gasströmung etwa parallel zur Achse (20) ermöglichen.

Die schematische Darstellung der Fig. 3 zeigt drei gleichartige Brenner (E), (F) und (G), die jeweils wie der in Fig. 1 beschriebene Brenner ausgestaltet sein können. Diese Brenner umgeben ein Rohr (18), welches einen nicht dargestellten, lösbaren Verschluß aufweisen kann. Das Rohr (18) kann dazu ausgebildet sein, bei Bedarf einen zusätzlichen Brenner, z. B. einen Aufheizbrenner, aufzunehmen, den man aber während des normalen Betriebs der Brenner (E), (F) und (G) wieder entfernt. Die Anzahl der Brenner, die das Rohr (18) umgeben, ist beliebig und kann z. B. zwei bis zehn betragen.

## Patentansprüche

1. Brenner für die partielle Oxidation von flüssigem, kohlenstoffhaltigem Brennstoff mit Wasserdampf und einem sauerstoffhaltigen Gas, wobei die Austrittsmündung des Brenners in eine Brennkammer gerichtet ist, **dadurch gekennzeichnet, daß** der Brenner in der Nähe der Austrittsmündung eine konische, sich zur Austrittsmündung hin erweiternde Mischkammer (2) aufweist, daß ein den flüssigen Brennstoff in die Mischkammer einspeisendes erstes Rohr (1) koaxial zur Mischkammer angeordnet ist, wobei sich das Mündungsende (1a) des ersten Rohrs im Bereich des Eintrittsendes (2a) der Mischkammer befindet und zwischen dem Mündungsende des ersten Rohrs und dem Eintrittsende der Mischkammer ein Ringspalt (3) für den Durchtritt von Wasserdampf besteht, daß eine erste Ringkammer (5) für das Durchleiten von Wasserdampf das erste Rohr umgibt und mit dem Ringspalt (3) verbunden ist, daß ein zweites Rohr (6) die erste Ringkammer (5) umgibt und abgedichtet an der Außenseite der Mischkammer (2) anliegt, daß eine zweite Ringkammer (11) für das Durchleiten von sauerstoffhaltigem Gas zur Austrittsmündung des Brenners das zweite Rohr und die Mischkammer umgibt, und daß die Mischkammer von ihrer Austrittsmündung bis zur Mündung (1a) des ersten Rohrs eine axiale Länge (A) von 10 bis 300 mm, einen größten Innendurchmesser von 10 bis 100 mm und einen Konuswinkel (x), gemessen gegen die Mischkammerachse, von 3 bis 20° aufweist.

2. Brenner nach Anspruch 1, **dadurch gekennzeichnet, daß** zwischen der Außenseite der Mischkammer (2) und der Außenseite des ersten Rohrs (1) eine Verbindungshülse (7) mit Durchtrittsöffnungen (8) angeordnet ist und daß die Hülse mindestens ein Gewinde aufweist, mit welchem sie in das erste Rohr (1) und/oder in die Wand der Mischkammer eingreift.

3. Brenner nach Anspruch 2, **dadurch gekennzeichnet, daß** die Außenseite der Verbindungshülse (7) am zweiten Rohr (6) gleitend und abgedichtet anliegt.

4. Brenner nach Anspruch 1 oder einem der folgenden, **dadurch gekennzeichnet, daß** sich das erste Rohr (1) zu seiner Mündung (1a) hin verengt.

5. Brenner nach Anspruch 1 oder einem der folgenden, **dadurch gekennzeichnet, daß** mehrere Brenner parallel und in die Brennkammer gerichtet angeordnet sind, wobei sich die Brenner in unmittelbarer Nähe einer verschließbaren Öffnung in der Brennkammer befinden, in welche ein bewegbarer Brenner einsetzbar ist.

## Claims

1. A burner for the partial oxidation of liquid, carbon-containing fuel with steam and an oxygen-containing gas, the exit opening of the burner being directed into a combustion chamber, **characterised in that** the burner has in the vicinity of the exit opening a conical mixing chamber (2) which widens towards the exit opening, that a first tube (1) feeding the liquid fuel into the mixing chamber is arranged coaxially to the mixing chamber, the end (1a) of the opening of the first tube being located in the region of the end (2a) of the entrance to the mixing chamber and there being between the end of the opening of the first tube and the end of the entrance of the mixing chamber an annular gap (3) for steam to pass through, that a first annular chamber (5) for passing steam through surrounds the first tube and is connected to the annular gap (3), that a second tube (6) surrounds the first annular chamber (5) and lies in sealed manner against the outside of the mixing chamber (2), that a second annular chamber (11) for passing oxygen-containing gas through to the exit opening of the burner surrounds the second tube and the mixing chamber, and that the mixing chamber, from its exit opening to the opening (1a) of the first tube has an axial length (A) of 10 to 300 mm, a maximum internal diameter of 10 to 100 mm and a cone angle (x), measured against the mixing-chamber axis, of 3 to 20°.

2. A burner according to Claim 1, **characterised in that** a connecting sleeve (7) with passage openings (8) is arranged between the outside of the mixing chamber (2) and the outside of the first tube (1) and that the sleeve has at least one thread by means of which it engages in the first tube (1) and/or in the wall of the mixing chamber.

3. A burner according to Claim 2, **characterised in that** the outside of the connecting sleeve (7) lies in sliding and sealed manner against the second tube (6).

4. A burner according to Claim 1 or one of the following claims, **characterised in that** the first tube (1) tapers towards its opening (1a).

5. A burner according to Claim 1 or one of the following claims, **characterised in that** a plurality of burners are arranged in parallel and directed into the combustion chamber, the burners being in the immediate vicinity of a closable opening in the combustion chamber into which a movable burner can be inserted.

## Revendications

1. Brûleur pour l'oxydation partielle de combustible carbonacé et liquide par de la vapeur d'eau et un gaz contenant de l'oxygène, l'embouchure de sortie du brûleur étant dirigée dans une chambre de combustion, **caractérisé en ce que** le brûleur a, à proximité de l'embouchure de sortie, une chambre (2) de mélange conique s'élargissant vers l'embouchure de sortie, **en ce qu'**il est prévu coaxialement à la chambre de mélange un premier tuyau (1) envoyant le combustible liquide dans la chambre de mélange, l'extrémité (1a) d'embouchure du premier tuyau se trouvant dans la zone de l'extrémité (2a) d'entrée de la chambre de mélange et il y a, entre l'extrémité d'embouchure du premier tuyau et l'extrémité d'entrée de la chambre de mélange, un intervalle (3) annulaire pour le passage de vapeur d'eau, **en ce qu'**une première chambre (5) annulaire pour le passage de la vapeur d'eau entoure le premier tuyau et communique avec l'intervalle (3) annulaire, **en ce qu'**un deuxième tuyau (6) entoure la première chambre (5) annulaire et s'applique de manière étanche à la face extérieure de la chambre (2) de mélange, **en ce qu'**une deuxième chambre (11) annulaire, pour l'envoi de gaz contenant de l'oxygène à l'embouchure de sortie du brûleur, entoure le deuxième tuyau et la chambre de mélange et **en ce que** la chambre de mélange a, de son embouchure de sortie jusqu'à l'embouchure (1a) du premier tuyau, une longueur (A) axiale de 10 à 300 mm, un diamètre intérieur le plus grand de 10 à 100 mm et un angle (x) de cône, mesuré par rapport à l'axe de la chambre de mélange, de 3 à 20°.

2. Brûleur suivant la revendication 1, **caractérisé en ce qu'**il est disposé entre la face extérieure de la chambre (2) de mélange et la face extérieure du premier tuyau (1), une douille (7) de liaison ayant des ouvertures (8) de passage et **en ce que** la douille a au moins un filetage par lequel elle pénètre dans le premier tuyau (1) et/ou dans la paroi de la chambre de mélange.

3. Brûleur suivant la revendication 2, **caractérisé en ce que** le côté extérieur de la douille (7) de liaison s'applique en glissant et avec étanchéité au deuxième tuyau (6).

4. Brûleur suivant la revendication 1 ou l'une des suivantes, **caractérisé en ce que** le premier tuyau (1) se rétrécit vers son embouchure (1a).

5. Brûleur suivant la revendication 1 ou l'une des suivantes, **caractérisé en ce que** plusieurs brûleurs sont disposés parallèlement et dirigés dans la chambre de combustion, les brûleurs se trouvant dans la chambre de combustion à proximité immédiate d'une ouverture qui peut être fermée et dans laquelle peut être inséré un brûleur mobile.
